# EUROPÄISCHE PATENTSCHRIFT

(11) **EP 3 578 399 B1**
(45) Veröffentlichungstag und Bekanntmachung des Hinweises auf die Patenterteilung: **21.07.2021**
(21) Anmeldenummer: 19175020.7
(22) Anmeldetag: 17.05.2019
(51) Int. Cl.: B60J 1/02

(54) **FAHRZEUG MIT UMGREIFENDER FRONTSCHEIBE UND ELEKTRISCHER KOMPONENTE ZWISCHEN VORDERSÄULE UND FRONTSCHEIBE**
VEHICLE WITH WRAP-AROUND WINDSHIELD AND ELECTRICAL COMPONENT BETWEEN FRONT COLUMN AND WINDSHIELD
VÉHICULE POURVU DE VITRE AVANT ENTOURANT ET DE COMPOSANT ÉLECTRIQUE ENTRE LA COLONNE AVANT ET LA VITRE AVANT

(30) Priorität: 05.06.2018 DE 102018208804
(43) Veröffentlichungstag der Anmeldung: 11.12.2019
(73) Patentinhaber: Audi AG, 85045 Ingolstadt (DE)
(72) Erfinder: VICENTE GARCIA, Bernardo, 85051 Ingolstadt (DE); TRIGUEROS MORERA DE LA VALL, Francisco, 80797 München (DE)

(56) Entgegenhaltungen:
- EP-A1- 1 234 752
- DE-A1- 2 826 949
- DE-A1-102008 005 899
- DE-A1-102015 109 382
- DE-U1-202016 103 822
- DE-U1-202017 103 060
- FR-A1- 2 978 379

## Beschreibung

Die Erfindung betrifft ein Fahrzeug mit einer Karosserie mit zwei Vordersäulen und einer mit der Karosserie verbundenen Frontscheibe, wobei die Frontscheibe derart dimensioniert ist, dass sie bezogen auf eine Frontansicht des Fahrzeugs die Vordersäulen im Wesentlichen vollständig abdeckt.

Bei einem derartigen Fahrzeug ist die Frontscheibe als sogenannte umgreifende Frontschiebe ausgebildet, so dass die Vordersäulen (A-Säulen) der Karosserie im Bereich der Frontscheibe nicht sichtbar sind.

Aus der DE 28 26 949 A1 ist ein Kraftfahrzeug mit einer die Vordersäulen abdeckenden Frontscheibe gemäß dem Oberbegriff von Anspruch 1 bekannt.

Aus der DE 20 2016 103 822 U1 ist eine Fahrtrichtungsanzeige bekannt, die flächig an der Außenseite bzw. Vorderseite einer in einer Frontansicht sichtbaren A-Säule eines Kraftfahrzeugs angebracht ist.

Aus der DE 20 2008 015 369 U1 ist es bekannt, eine zusätzliche Warnblinkeinrichtung im Dach, am oberen Ende einer Heckklappe, im Dachspoiler, in Karosseriesäulen oder am oberen Rand einer Heck- oder Frontscheibe anzuordnen. Bei dieser Art der Anbringung einer zusätzlichen Warnblinkeinrichtung sind umfangreiche Anpassungen an Karosseriebauteilen bzw. an Übergangsbereichen zwischen Scheibenelementen und Karosseriebauteilen erforderlich.

Die der Erfindung zu Grunde liegende Aufgabe wird darin gesehen, ein Fahrzeug bereitzustellen, bei dem die obigen Nachteile vermieden werden können.

Diese Aufgabe wird gelöst durch ein Fahrzeug mit den Merkmalen des Patentanspruchs 1. Vorteilhafte Ausgestaltungen mit zweckmäßigen Weiterbildungen sind in den abhängigen Patentansprüchen angegeben.

Es wird also ein Fahrzeug vorgeschlagen mit einer Karosserie mit zwei Vordersäulen, mit einer mit der Karosserie verbundenen Frontscheibe, wobei die Frontscheibe derart dimensioniert ist, dass sie bezogen auf eine Frontansicht des Fahrzeugs die Vordersäulen im Wesentlichen vollständig abdeckt. Dabei ist vorgesehen, dass in einem Zwischenraum, der zwischen einer Außenseite jeder Vordersäule und einer Innenseite der Frontscheibe gebildet ist, wenigstens eine elektrisch betriebene Komponente angeordnet ist.

Hierdurch kann die elektrische Komponente in einem vorderen oberen Bereich am Fahrzeug und geschützt hinter der umgreifenden Frontscheibe angeordnet werden. Insbesondere kann ein zwischen der Frontscheibe und der Vordersäule sowieso vorhandener Zwischenraum optimal ausgenutzt werden, um eine oder mehrere elektrische Komponenten unterzubringen.

Die elektrisch betriebene Komponente kann zumindest zeitweise elektromagnetische Strahlung aussenden oder/und elektromagnetische Strahlung empfangen. Dabei ist das Aussenden bzw. Empfangen von elektromagnetischer Strahlung vom Betriebszustand des Fahrzeugs bzw. von der Betätigung von Bedienelementen im Fahrzeug abhängig.

Erfindungsgemäß weist die Frontscheibe einen die Vordersäulen abdeckenden Überdeckungsbereich auf, wobei die Frontscheibe im Überdeckungsbereich wenigstens teilweise einen Schwarzdruck aufweist. Dabei weist der Schwarzdruck wenigstens einen unterbrochenen oder transparenten oder semitransparenten Abschnitt auf, wobei die elektrisch betriebene Komponente im Bereich des unterbrochenen oder transparenten oder semitransparenten Abschnitts angeordnet ist.

Hierdurch kann gewährleistet werden, dass insbesondere elektromagnetische Strahlung im optisch sichtbaren Wellenlängenbereich nach außen hin wahrgenommen werden kann.

Die elektrisch betriebene Komponente kann eine optoelektronische Komponente sein, insbesondere eine LED-Lichtleiste oder dergleichen. Es ist möglich, dass die optoelektronische Komponente so ausgestaltet ist, dass sie Licht in unterschiedlichen Farben abstrahlen kann. Dabei kann die optoelektronische Komponente beispielsweise die Funktion einer Blinkereinrichtung aufweisen oder/und die Funktion einer Beleuchtungseinrichtung. Dabei kann die Beleuchtungseinrichtung dazu dienen, dass das Fahrzeug besser wahrgenommen werden kann, insbesondere auch in Situationen, in denen man vom unteren Teil des Fahrzeugs, in dem üblicherweise Beleuchtungseinrichtungen angebracht sind, wenig sieht. Das integrieren einer Blinkereinrichtung an einer relativ hohen Position im Bereich der Vordersäule des Fahrzeugs bietet eine bessere Sichtbarkeit für vorausfahrende Fahrzeuge. Dies ist beispielsweise der Fall, wenn der Abstand zwischen den Fahrzeugen gering ist und der im unteren Bereich des Fahrzeugs angeordnete Blinker im Rückspiegel des vorausfahrenden Fahrzeugs nicht in jedem Fall sichtbar ist. Ferner verbessert die Anordnung einer Blinkeinrichtung in diesem erhöhten Bereich auch die Sichtbarkeit für Fußgänger und Radfahrer, deren Blickfeld oft auf diese Höhe fokussiert ist.

Alternativ oder ergänzend kann die elektrisch betriebene Komponente eine Sensoreinrichtung sein, insbesondere eine Infrarotsensoreinrichtung oder eine optische Sensoreinrichtung. Beispielsweise kann eine im Überdeckungsbereich der Frontschiebe angeordnete Sensoreinrichtung Funktionen für das autonome Bewegen des Fahrzeugs bereitstellen. Eine solche Sensoreinrichtung kann auch hinter einem undurchsichtigen Bereich des Schwarzdrucks angeordnet sein.

Es wird darauf hingewiesen, dass im Zwischenraum zwischen der Vordersäule und der Frontscheibe auch eine optoelektronische Komponente und eine Sensoreinrichtung vorgesehen sein können. Grundsätzlich können in diesem Bereich entlang der Vordersäule im gesamten Überdeckungsbereich der Frontscheibe auch mehrere gleichartige oder verschiedenartige, elektrisch betriebene Komponenten angeordnet werden.

Die elektrisch betriebene Komponente kann an der Vordersäule, insbesondere an deren Außenseite, befestigt sein. Hierdurch kann beispielswiese sichergestellt werden, dass die Frontscheibe etwa im Falle einer Beschädigung ausgetauscht werden kann, ohne dass dies einen Einfluss auf die Anordnung und Funktionsweise der elektrisch betriebenen Komponente(n) hat.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen. Dabei zeigt:
- Fig. 1: eine schematische und vereinfachte perspektivische Darstellung eines Teils einer Frontscheibe und einer Seitentüre eines Fahrzeugs;
- Fig. 2: eine schematische und vereinfachte perspektivische Darstellung entsprechend der Figur 1 mit unterbrochenem Schwarzdruck in einem seitlichen Bereich der Frontscheibe;
- Fig. 3: in einer vereinfachten und schematischen Schnittdarstellung etwa entsprechend der Schnittlinie III-III der Fig. 2 einen Querschnitt im Bereich einer Vordersäule mit einer elektrisch betriebenen Komponente;
- Fig. 4: in einer vereinfachten und schematischen Schnittdarstellung etwa entsprechend der Schnittlinie III-III der Fig. 2 einen im Vergleich zur Figur 3 ähnlichen Querschnitt im Bereich der Vordersäule mit einer leicht veränderten elektrisch betriebenen Komponente.

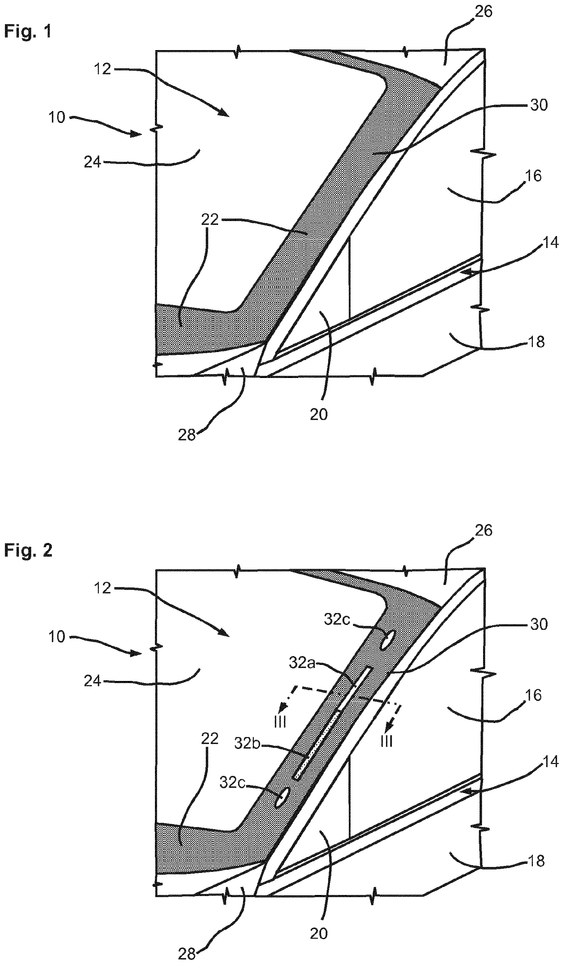

In Figur 1 ist ein vorderer, seitlicher Teil eines Fahrzeugs 10 dargestellt mit einer Frontscheibe 12 und einer Seitentüre 14. Die Seitentüre 14 umfasst hier ein Seitenfenster 16, und ein nach außen hin sichtbares Seitenblech 18. Das Seitenfenster 16 ist in einem vorderen Bereich in einer Fensterführung 20 angeordnet.

Die Frontscheibe weist entlang ihres Umfangs einen sogenannten Schwarzdruck 22 auf. Der Schwarzdruck 22 begrenzt einen durchsichtig belassenen inneren Bereich 24 der Frontscheibe. Üblicherweise dient der Schwarzdruck 22 dazu, Bereich entlang des Umfangs der Frontscheibe 12 abzudecken, die von außen nicht sichtbar sein sollen durch die ansonsten einstückig und durchsichtig ausgebildete Frontscheibe 12.

Wie in der Figur 1 dargestellt, ist die Frontscheibe 12 so dimensioniert, dass eine üblicherweise nach vorne hin sichtbare Vordersäule von der Frontscheibe abgedeckt ist. Dabei ist die Vordersäule insbesondere hinter einem seitlichen Bereich 30 des Schwarzdrucks 22 angeordnet.

Der Vollständigkeit halber und zur besseren Orientierung wird noch darauf hingewiesen, dass ein kleiner Ausschnitt eines Dachs 26 des Fahrzeugs 10 und eines vorderen, seitlichen Kotflügels 28 ersichtlich sind.

Figur 2 zeigt im Wesentlichen die gleichen Inhalte wie die Figur 1. Einzig im Schwarzdruck 22 sind Unterbrechungen 32a, 32b angeordnet. Im Bereich solcher Unterbrechungen 32a, 32b kann der Schwarzdruck 22 vollständig ausgelassen sein, so dass ein vollständig transparenter Bereich 32a gebildet ist. Der Schwarzdruck 22 kann aber auch halbtransparent ausgebildet sein, so dass ein semi-transparenter Bereich 32b gebildet ist.

In Bezug auf die Dimensionierung und die Anzahl von Unterbrechungen 32a, 32b in dem Schwarzdruck 22, insbesondere im seitlichen Bereich 30 des Schwarzdrucks 22, sind viele denkbaren Optionen möglich. Beispielsweise kann eine von oben nach unten durchgehende Unterbrechung mit gleichbleibender Transparenz vorgesehen sein. Im vorliegenden Beispiel wäre dann die Unterbrechung auf ihrer gesamten Länge entweder als transparente Unterbrechung 32a oder als semi-transparente Unterbrechung 32b ausgebildet. Denkbar sind aber auch mehrere eher punktuelle Unterbrechungen, wie dies beispielsweise durch die Unterbrechungen 32c angedeutet ist.

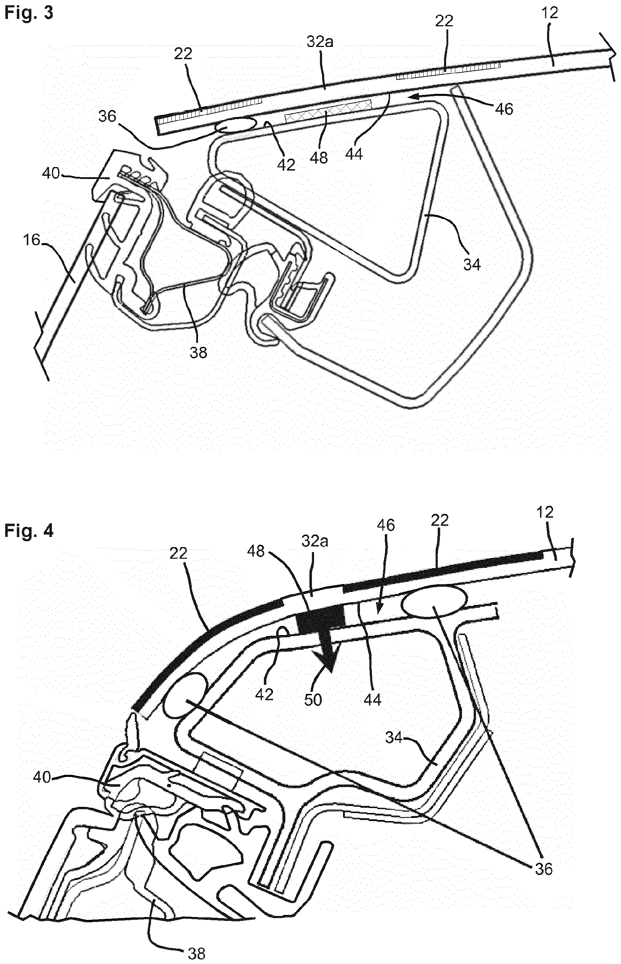

Figur 3 zeigt in einer vereinfachten und teilweise transparenten Schnittdarstellung eine Vordersäule 34 des Fahrzeugs 10. Die Vordersäule 34 wird üblicherweise auch als A-Säule bezeichnet. Ferner sind in Figur 3 die bereits aus den Figuren 1 und 2 bekannte Frontscheibe 12, die Seitenscheibe 16 und der Schwarzdruck 22 ersichtlich. Die Frontscheibe 12 überdeckt die Vordersäule 34. Ferner ist ersichtlich, dass die Frontscheibe 12 durch eine Klebeverbindung 36 mit der Vordersäule 34 verbunden ist. Die Seitenscheibe 16 ist in einem Türrahmen 38 aufgenommen. Am Türrahmen 38 ist eine Türdichtung 40 angebracht.

Zwischen einer Außenseite 42 der Vordersäule 34 und einer Innenseite 44 der Frontscheibe ist ein Zwischenraum 46 ausgebildet. In diesen Zwischenraum ist wenigstens eine elektrisch betriebene Komponente 48 angeordnet. Die elektrisch betriebene Komponente 48 ist im dargestellten Beispiel an der Vordersäule 34 befestigt. In Figur 3 ist die elektrisch betriebene Komponente 48 rein schematisch als gekreuzt schraffiertes Rechteck dargestellt. Die elektrisch betriebene Komponente 48 kann beispielsweise materialschlüssig mit der Vordersäule 34, insbesondere mit deren Außenseite 42, verbunden sein, beispielsweise verklebt sein. Alternativ kann eine elektrisch betriebene Komponente an der Frontscheibe befestigt sein, insbesondere mit der Innenseite 44 der Frontscheibe materialschlüssig verbunden bzw. verklebt sein.

Die elektrisch betriebene Komponente 48 ist im dargestellten Beispiel im Bereich der transparenten Unterbrechung 32a des Schwarzdrucks 22 angeordnet. Entsprechend kann insbesondere im sichtbaren Spektralbereich von der Komponente 48 ausgesendete Strahlung durch die Frontscheibe hindurch von außen vorne und ggf. auch leicht seitlich wahrgenommen werden. Die elektrisch betriebene Komponente 48 kann beispielsweise ein optoelektronisches Bauteil sein, etwa ein LED-Lichtband, das entlang der Vordersäule 34 angeordnet ist. Die elektrisch betriebene Komponente 48 kann aber auch so ausgeführt sein, dass sie Strahlung im nicht sichtbaren Spektralbereich aussendet, etwa Infrarotstrahlung oder dergleichen, so dass sie als Sender oder/ und Empfänger für die Umgebungsabtastung eingerichtet ist. Es ist auch denkbar, dass entlang der Vordersäule 34 als elektrische Komponenten 48 eine Sendeeinrichtung und eine hiervon getrennte Empfangseinrichtung angeordnet werden.

Figur 4 zeigt eine zur Figur 3 ähnliche Schnittansicht im Bereich einer Vordersäule 34 eines Fahrzeugs 10. Die Vordersäule 34 weist in diesem Beispiel einen etwas anderen Querschnitt auf als die Vordersäule 34 der Figur 3. Die Frontscheibe 12 ist im Beispiel der Figur 4 etwas stärker um die Vordersäule 34 herumgezogen bzw. gekrümmt bzw. gebogen. Die Frontschiebe weist in diesem Beispiel im Bereich der Vordersäule 34 zwei Klebeverbindungen 36 auf. Auch in diesem Beispiel ist im Bereich der Unterbrechung 32a des Schwarzdrucks 22 eine elektrisch betriebene Komponente 48 hinter der Frontscheibe 12 angeordnet. Das Beispiel zeigt eine Art Clip 50 mittels dem die Komponente 48 mit der Vordersäule 34 verbunden ist. Eine derartige formschlüssige oder kraftschlüssige Verbindung zwischen der Komponente 48 und der Vordersäule 34 kann alternativ oder ergänzend zu einer in Bezug auf die Figur 3 beschriebene materialschlüssige Verbindungen eingesetzt werden. Natürlich können entlang der Vordersäule 34 mehrere Clipverbindungen 50 vorgesehen sein, um beispielsweise eine längliche Komponente 48, wie etwa eine LED-Lichtband, zu befestigen.

Auch wenn in den hier dargestellten Beispielen der Figuren 3 und 4 eine elektrische betriebene Komponente 48 jeweils im Bereich der transparenten Unterbrechung 32a des Schwarzdrucks 22 gezeigt ist, wird darauf hingewiesen, dass eine elektrisch betriebene Komponente 48 auch im Bereich der semitransparenten Unterbrechung 32b oder im Bereich von punktuellen Unterbrechungen 32c angeordnet sein kann. Ferner kann eine elektrisch betriebene Komponente 48, die elektromagnetische Strahlung im nicht sichtbaren Wellenlängenbereich aussendet oder/und empfängt, auch hinter dem Schwarzdruck 22 angeordnet sein, also insbesondere in einem Bereich, in dem keine Unterbrechung im Schwarzdruck 22 vorhanden ist.

## Patentansprüche

1. Fahrzeug (10) mit
einer Karosserie mit zwei Vordersäulen (34);
einer mit der Karosserie verbundenen Frontscheibe (12), wobei die Frontscheibe (12) derart dimensioniert ist, dass sie bezogen auf eine Frontansicht des Fahrzeugs die Vordersäulen (34) im Wesentlichen vollständig abdeckt,
**dadurch gekennzeichnet, dass** in einem Zwischenraum (46), der zwischen einer Außenseite (42) jeder Vordersäule und einer Innenseite (44) der Frontscheibe (12) gebildet ist, wenigstens eine elektrisch betriebene Komponente (48) angeordnet ist, und dass die Frontscheibe (12) einen die Vordersäulen (34) abdeckenden Überdeckungsbereich aufweist, wobei die Frontscheibe (12) im Überdeckungsbereich wenigstens teilweise einen Schwarzdruck (22) aufweist, wobei der Schwarzdruck (22) wenigstens einen unterbrochenen oder transparenten oder semitransparenten Abschnitt (32a, 32b, 32c) aufweist, und wobei die elektrisch betriebene Komponente (48) im Bereich des unterbrochenen oder transparenten oder semitransparenten Abschnitts (32a, 32b, 32c) angeordnet ist.

2. Fahrzeug nach Anspruch 1, **dadurch gekennzeichnet, dass** die elektrisch betriebene Komponente (48) zumindest zeitweise elektromagnetische Strahlung aussendet oder/und elektromagnetische Strahlung empfängt.

3. Fahrzeug nach Anspruch 1 oder 2, **dadurch gekennzeichnet, dass** die elektrisch betriebene Komponente (48) eine optoelektronische Komponente ist, insbesondere eine LED-Lichtleiste.

4. Fahrzeug nach einem der vorhergehenden Ansprüche, **dadurch gekennzeichnet, dass** die elektrisch betriebene Komponente (48) eine Sensoreinrichtung ist, insbesondere eine Infrarotsensoreinrichtung oder eine optische Sensoreinrichtung

5. Fahrzeug nach einem der vorhergehenden Ansprüche, **dadurch gekennzeichnet, dass** die elektrisch betriebene Komponente (48) an der Vordersäule (34), insbesondere an deren Außenseite, befestigt ist.

## Claims

1. Vehicle (10) having
a body with two front columns (34);
a windshield (12) connected to the body, wherein the windshield (12) is dimensioned such that, with regard to a front view of the vehicle, it essentially fully covers the front columns (34),
**characterised in that** in an intermediate space (46), which is formed between an outer side (42) of each front column and an inner side (44) of the windshield (12), at least one electrically operated component (48) is arranged, and **in that** the windshield (12) has a covering region covering the front columns (34), wherein the windshield (12) in the covering region has a black imprint (22) at least in some areas, wherein the black imprint (22) has at least one interrupted or transparent or semi-transparent section (32a, 32b, 32c), and wherein the electrically operated component (48) is arranged in the region of the interrupted or transparent or semi-transparent section (32a, 32b, 32c).

2. Vehicle according to claim 1, **characterised in that** the electrically operated component (48) emits electromagnetic radiation at least some of the time or/and receives electromagnetic radiation.

3. Vehicle according to claim 1 or 2, **characterised in that** the electrically operated component (48) is an optoelectronic component, in particular an LED light strip.

4. Vehicle according to any of the preceding claims, **characterised in that** the electrically operated component (48) is a sensor apparatus, in particular an infrared sensor apparatus or an optical sensor apparatus.

5. Vehicle according to any of the preceding claims, **characterised in that** the electrically operated component (48) is fixed to the front column (34), in particular on its outer side.

## Revendications

1. Véhicule (10) avec
une carrosserie avec deux piliers avant (34) ;
un pare-brise (12) relié à la carrosserie, dans lequel le pare-brise (12) est dimensionné de manière à recouvrir essentiellement complètement les piliers avant (34) lorsque le véhicule est considéré de face,
**caractérisé en ce qu'**au moins un composant à commande électrique (48) est agencé dans un espace libre (46) formé entre un côté extérieur (42) de chaque pilier avant et un côté intérieur (44) du pare-brise (12), et **en ce que** le pare-brise (12) présente une région de recouvrement recouvrant les piliers avant (34), dans lequel le pare-brise (12) présente au moins partiellement une impression en noir (22) dans la région de recouvrement, dans lequel l'impression en noir (22) présente au moins une section interrompue ou transparente ou semi-transparente (32a, 32b, 32c), et dans lequel le composant à commande électrique (48) est agencé dans la région de la section interrompue ou transparente ou semi-transparente (32a, 32b, 32c).

2. Véhicule selon la revendication 1, **caractérisé en ce que**, au moins temporairement, le composant à commande électrique (48) émet un rayonnement électromagnétique et/ou reçoit un rayonnement électromagnétique.

3. Véhicule selon la revendication 1 ou 2, **caractérisé en ce que** le composant à commande électrique (48) est un composant optoélectronique, en particulier une bande lumineuse à DEL.

4. Véhicule selon l'une quelconque des revendications précédentes, **caractérisé en ce que** le composant à commande électrique (48) est un appareil de détection, en particulier un appareil de détection infrarouge ou un appareil de détection optique.

5. Véhicule selon l'une quelconque des revendications précédentes, **caractérisé en ce que** le composant à commande électrique (48) est fixé au pilier avant (34), en particulier au niveau du côté extérieur dudit pilier.
